# EUROPEAN PATENT SPECIFICATION

(11) **EP 1 083 342 B1**
(45) Date of publication and mention of the grant of the patent: **07.06.2006**
(21) Application number: 00307615.5
(22) Date of filing: 04.09.2000
(51) Int. Cl.: F16B 39/30, F16B 41/00

(54) **Nut/bolt assembly**
Mutter und Schraubenanordnung
Ensemble vis-écrou

(30) Priority: 08.09.1999 CN 99119304; 08.09.1999 CN 99244237
(43) Date of publication of application: 14.03.2001
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(56) References cited:
- EP-A- 0 643 230
- EP-A- 0 881 400
- US-A- 3 408 887
- US-A- 4 240 670
- US-A- 4 840 529
- US-A- 5 253 967
- US-A- 5 607 271

## Description

### BACKGROUND OF THE INVENTION:

### (a) Field of the Invention

Composite screw-bolt or screw-nut structure, featuring an external thread section permissive of compression or fine adjustment apart from the inherent threads, internal thread section in particular, of same, this in addition serving to improve the structure of screw-bolt or screw-nut bearing a multiple thread section, to make possible multiple tightening or fine adjustment capabilities.

### (b) Description of the Prior Art:

In traditional screw bolt or screw nut structures, functions including binding, compression, fine adjustments or measurements were executed by means of their pitches, and typically only external pitch or internal pitch, or both are provided for conventional screws or screw nuts, that fact resulting inevitably in foreseeable compressing or fine adjusting limit where compression or fine adjustment is intended.

EP 0643230 A1 discloses a nut or bolt with fine adjustment comprising a primary screw thread formed in the nut or on the bolt, on an axial extent of which is formed an external secondary screw thread with a pitch which is less than thar of the primary screw thread. A correspondingly internally threaded auxiliary nut is screwed on the axial extent providing an effective packing and/or micro-adjustment means to the combination. The location of the secondary screw thread is such that it does not interfere with normal rotation of the nut or bolt.

When professionals in the art may have found it comforting the commercialised presentation of a novel design of two-shift screw bolt/screw nut assembly, such a design transpires the following defects while put to use:
1. Vulnerability to loss as easy as the conventional single piece screw bolt/screw nut design which it purports to replace;
2. Absence of consideration as regards thread/pitches between the shifts, and that falling prey to slackening effects in an event of vibration, stuck by fits of resonance frequency in particular;
3. The want of consideration as to the direction of helical movement to define, and therefore restrict the scope of application.

With a view to provide a feature highlighted in save of labour on the part of the user, and achievement of compression and fine adjustment capabilities so as to expand the scope of applications hereby is introduced a novel design in the name of a composite screw bolt or screw nut structure.

### SUMMARY OF THE INVENTION

The primary object of the invention, therefore, is to provide a novel design of a composite screw bolt/screw nut structure, featuring an external thread section on the screw end or outside the screw nut in addition to the inherently provided internal/external thread sections that go with the screw or screw nut, so that two thread shafts are formed for both the screw and the nut, in this composite layout making possible several supplementary compressioning or fine adjustment capabilities.

According to the invention, a screw fastener has multiple threaded portions, the screw fastener comprising: a main body having a first threaded portion with a first diameter, and a second, externally-threaded portion with a second diameter that is larger than the first diameter; a peripheral nut having an internal thread for engaging the second, externally-threaded portion of the main body, and stop means in the form of a peripheral flange or a washer ring or a safeguard pin, said stop means extending from the main body at one end of the second threaded portion for abutting one side of the peripheral nut when it is engaged with the second, externally-threaded portion, wherein the threads of the first and second threaded portions run either in opposite directions, or in the same direction. A number of preferred or advantageous features are referred to in the dependent claims.

### BRIEF DESCRIPTION OF THE DRAWINGS:

Fig. 1 is an illustration of the invention of two-shift helical propellant execution;
Fig. 2 is an illustration of the invention executed with nut established on the screw stem;
Fig. 3 is an illustration of the invention with a cap installed upon the nut compartment;
Fig. 4 illustrates the invention, screw or nut, fitted with a washer ring;
Fig. 5 illustration the invention, screw or nut, fitted with a safeguard pin;
Fig. 6 illustrates the invention executed in a directional setting contrary to usual practice ; in the case of a screw;
Fig. 7 illustrates the invention executed in a directional setting contrary to usual practice, in the case of a nut;
Fig. 8 illustrates the invention executed in a two-thread section, parallel and eccentric, in the case of a screw;
Fig. 9 illustrates the execution in a two-thread section of the invention, with shaft core curvatured, in the case of a screw;
Fig. 10 illustrates the invention executed in a two-thread section, shaft core parallel, but eccentric, in the case of a screw nut;
Fig. 11 illustrates the invention executed in a two-thread section, shaft core non-parallel, in the case of a screw nut;
Fig. 12 is a three-dimensional view of a camber washer, executed according to the invention;
Fig. 13 illustrates two camber washers matched in engagement, according to the invention;
Fig. 14 illustrates a screw mounted with a gear to assembly, according to the invention;
Fig. 15 illustrates a nut mounted with a gear to assembly, according to the invention;
Fig. 16 illustrates a triplicate screw/nut/gear assembly set at work, according to the invention;
Fig. 17 illustrates the pre-assembly of a pinion in a screw or nut, structured according to the invention;
Fig. 18 illustrates a polygonal notch formed in a hollow-set, larger end of a screw lever, structured according to the invention;
Fig. 19A is an exploded three-dimensional perspective of the coupling stem forming part of a screw according to the invention; and
Fig. 19B is an exploded three-dimensional perspective of the coupling stem forming part of a nut according to the invention;

### DETAILED DESCRIPTION OF THE PREFERRED EMBODIMENTS

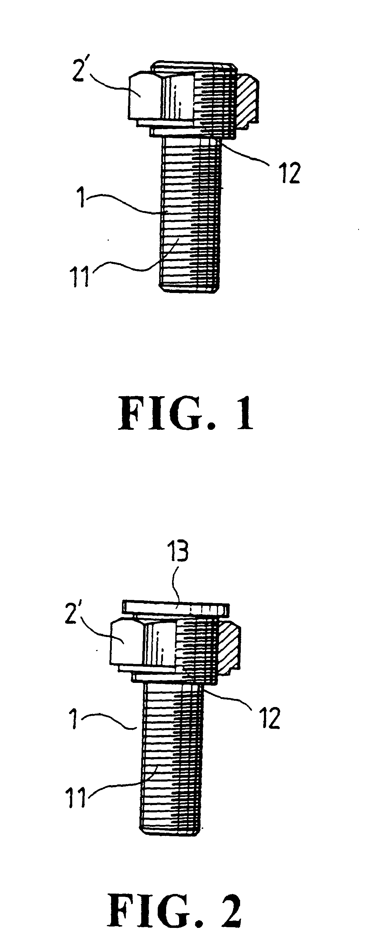

As shown in Fig. 1 and Fig. 2 respectively, the invention features essentially the provision of an additional external thread section 12 overlapping the prime thread section 11 respecting screw 1, or alternatively, an additional external thread section 22 enclosing the inner thread section 21 respecting nut 2, so that said external thread section 11 respecting the screw 1 or else the additional external thread section 22 respecting the nut 2 may lock up a peripheral nut 2', and that by the interaction due to screw 1, peripheral nut 2', or else due to nut 2 with peripheral nut 2', intended compressioning, fine adjustment effects are realized, more specifically.

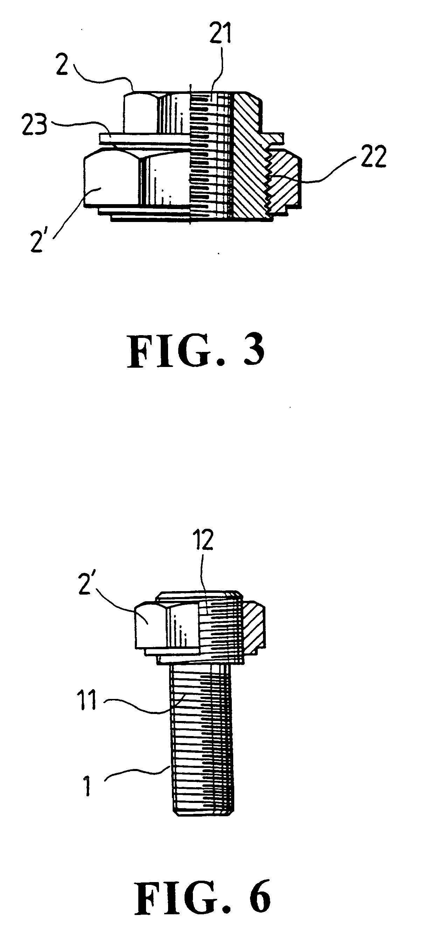

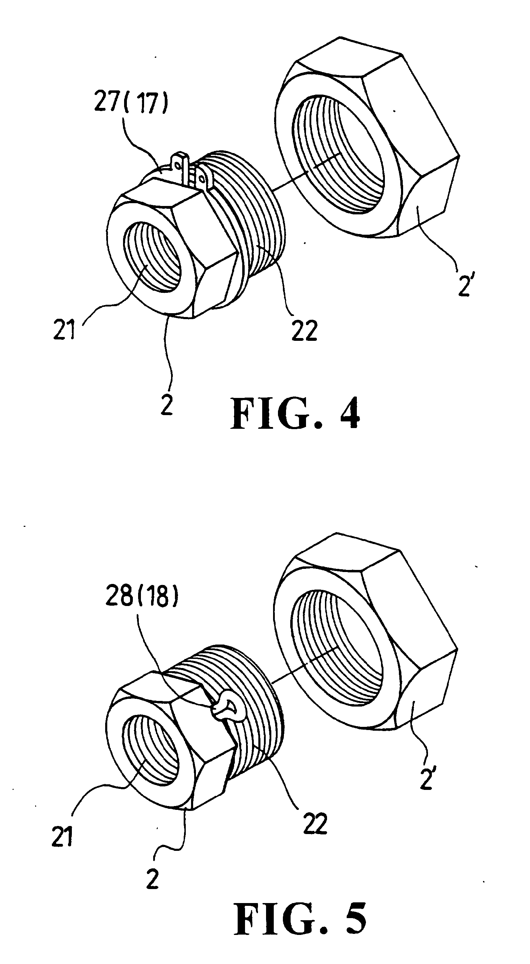

As shown in Fig. 2 and Fig. 3 jointly, a feature of the invention lies in the provision of a cap 13, 23, adjacent to the top of an additional thread section 12 respecting screw 1, or else to the top of said additional external thread section 22 respecting nut 2, to hold said peripheral nut 2' fast in place from slack; the diameter of said nut 13, 23 being larger than in the case of both the external thread section 12, and 22, that in order to bind the peripheral nut 2' with the external thread section 12 of screw 1, that the binding thus achieved will not go loose in any direction than that by which it is locked tight, further, that being accomplished, the binding between peripheral nut 2' and the additional external thread section 22 is denied a chance to loosen off other than in the direction by which it is locked. Referring altogether to Fig. 4 and Fig. 5, it will be appreciated that said cap 13, 23 may be replaced by a washer ring 17, 27 or else a safeguard pin 18, 28, while the effects due to capping 13, 23 remain unchanged.

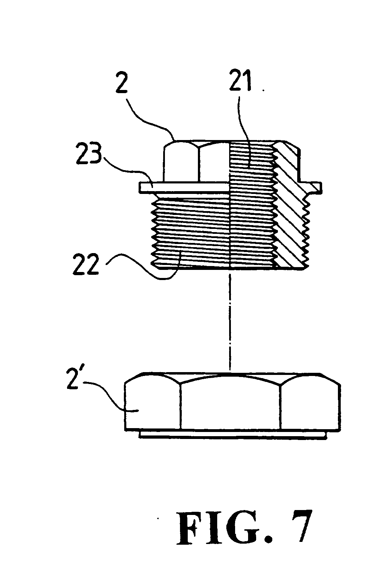

Further as shown in Fig. 6, the prime thread section 11 spoken of the screw 1 can run in a direction different than in the case of said additional external thread section 12, where on goes left-handed helically, the other goes right-handed helically, so that once screw 1 being locked against a workpiece is secured by the peripheral nut 2' additionally, a redoubled compression will be realized, achieving redoubled slack-proofing effects, similar effect can be appreciated by referencing to Fig. 7, where the direction in which the internal thread section 21 goes, respecting the nut 2, is different than in the case of the additional external thread section 22.

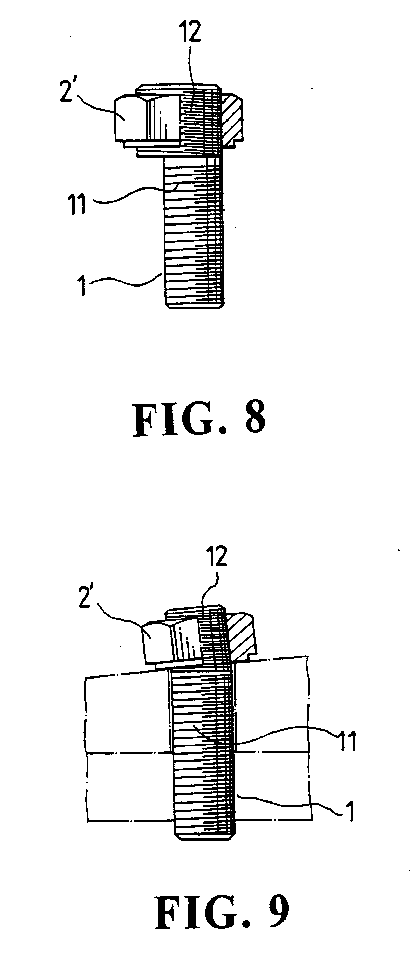

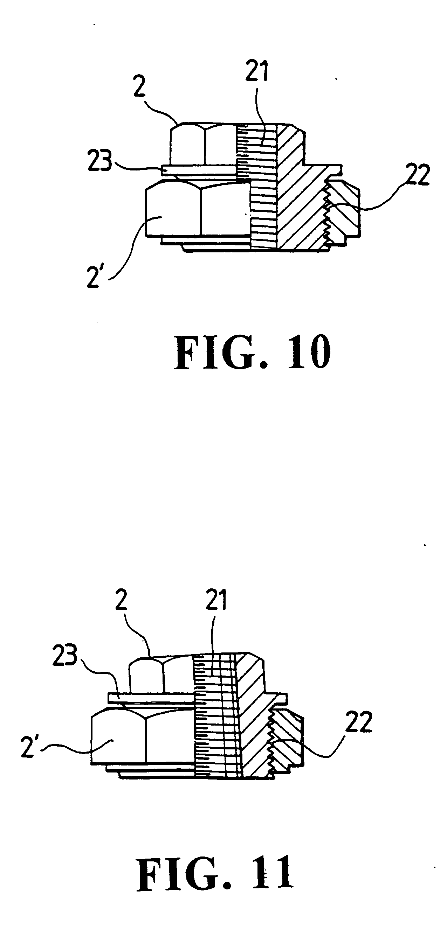

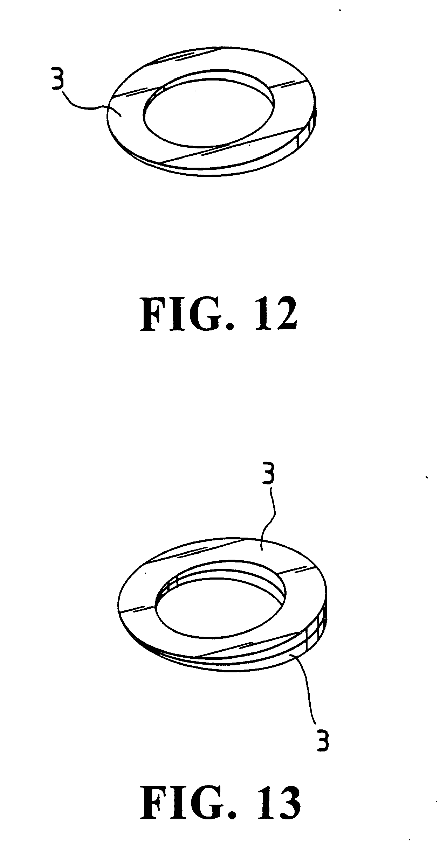

As shown in Fig. 8, respecting screw 1, the prime thread section 11 and the external thread section 12 overlapping it are the same in that both are related to each other with parallel shafts but dissimilar in that their shafts are not concentric, referring to Fig. 9, it is seen that the prime thread 11 and the external thread section 12 overlapping same respecting the screw 1 may be treated curvatured so that once the prime thread section 11 is locked onto the workpiece at a slope, the peripheral nut 2' may be locked onto said external thread section 12 so that the bottom of said peripheral nut 2' is attached tight to the sloped side of the workpiece, so that, screw 1 may be applied to a workpiece with a sloped front without getting slack. Referring to Fig. 10, it will be seen that spoken of the nut 2, shaft of the inner thread section 21 and shaft of the peripheral thread section 22 are parallel to each other, but not concentric; also, as shown in Fig. 11, spoken of the same nut 2, shaft of the inner thread section 21 and shaft of the peripheral thread section 22 are out of parallelism and eccentric with each other, this trait making it possible for application on workpieces with a sloped front without getting slack. In the execution illustrated in Fig. 12 concurrently with Fig. 13, the invention may incorporate a camber washer 3 to help adapting both screw 1, nut 2 of cruvatured shaft to application on workpieces with differing sloped fronts, the camber washer may be used in pairs to adapt to various angular settings necessitated in operation.

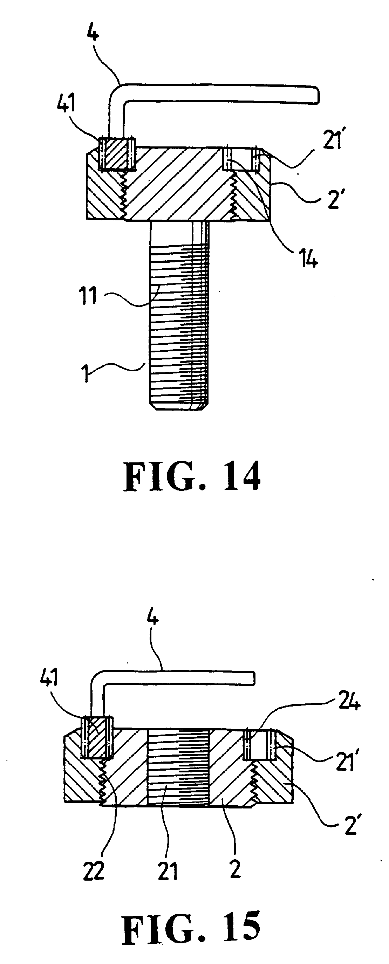

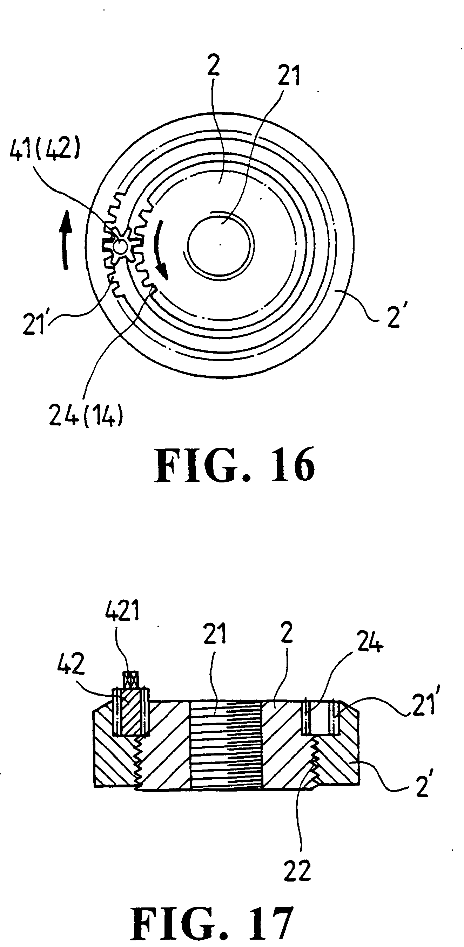

Referring to Fig. 14 and Fig. 15, it can be seen that spoken of the screw 1, the direction in which the prime thread section 11 goes is different from that in which the external thread section 12 moves, the same is true spoken of the nut 2 as to the direction in which the inner thread section 21 runs in contrast to that in which the peripheral thread section 22 moves, in contrast to a gear 14 taken form on top of the external thread section 12 of the screw 1 there is also a gear 24 formed on top of the peripheral thread section 22 of the nut 2; while on top of the inner thread of the peripheral nut 2' there forms a pinion 21' of a larger diameter which, once engagement between peripheral nut 2' and screw 1 or else with the external thread section 12, 22 respecting the nut 2 is made, may be carried by a handle 4 simultaneously to turn light locked, the handle preferably in the form of an L shape spanner 4, on the working end thereof is provided a pinion 41 which can just get caught into engagement with the interspace between gear 14, 24 and pinion 21', so as to constitute roughly a planetary gear assembly, by rotating said spanner 4, screw 1 or nut 2 will react to proceed in a direction having checking effects upon the peripheral nut 2', like what is shown in Fig. 16, to facilitate subsequent execution of tightening or loosening stresses; or alternatively, as shown in Fig. 17, it is feasible to have a pinion 42 installed in advance way between gear 14, 24 and gear 21', on top of said pinion 42 is formed a coupling section 421 which once driven through conventional spanning maneuvering will attain the same effects as described hereinbefore; the composite screw or nut strucrture incorporating said gear set as disclosed thus far will prove a truly reliable security-lasting and labor-saving means when applied in the locking of larger scale apparatus.

The several embodiments of the invention executed in a screw 1 or nut 2 of a two-thread section design, bound for a same or different screwing direction, incorporating caps 13, 23, with said two-thread section being concentric or otherwise, comprising either or more than one improvement by structure, all fall within the scope of the invention hereunder, what with its toleration of compression and fine adjustment where usage to such effects is desired, the invention is good for extensive applications in the industry.

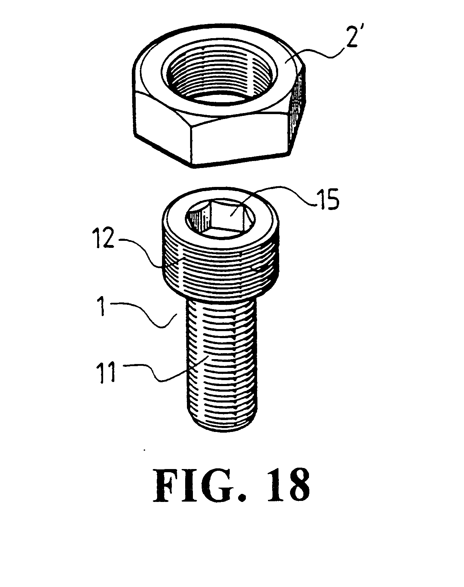

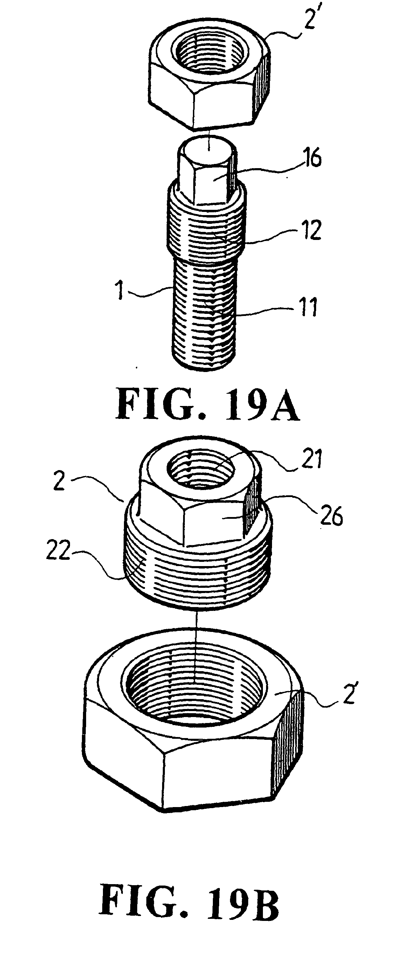

In the embodiment comprising the improvement of screw 1, nut 2 and the two-shaft thread integral with the peripheral nut 2', the coupling means to drive the screw 1 and nut 2 as shown in Fig. 18 sets in a polygonal notch 15 that is centrally positioned on top of the external thread section 12, so that transmission with respect to said notch 15 is possible by the drive of a manual tool, such as is illustrated in Fig. 19A and Fig. 19B, while an alternative execution is the formation of a polygonal coupling stem 16, 26 projected on top of the external thread section 12, 22 of either screw 1 or nut 2, so that transmission is possible with respect thereto. The top end of the external thread section 12 associated with the screw 1 may be processed into a cross-head groove pattern, or into the form of a bisecting groove; or into the form of an asterisk groove, all facilitating coupling transmission by a hand tool, So in short, understandably any and all means capable of driving the composite screw 1 or nut 2 structured according to the invention are to be considered means exercisable for the execution of the invention.

## Claims

1. A screw fastener with multiple threaded portions, the screw fastener comprising:
a main body (1 or 2) having a first threaded portion (11 or 21) with a first diameter, and a second, externally-threaded portion (12 or 22) with a second diameter that is larger than the first diameter;
a peripheral nut (2') having an internal thread for engaging the second, externally-threaded portion of the main body; and
stop means in the form of a peripheral flange (13 or 23) or a washer ring (17 or 27) or a safeguard pin (18 or 28), said stop means (13 or 23, 17 or 27, 18 or 28) extending from the main body at one end of the second threaded portion for abutting one side of the peripheral nut when it is engaged with the second, externally-threaded portion,
wherein the threads of the first and second threaded portions run either in opposite directions, or in the same direction.

2. A screw fastener as claimed in claim 1, wherein the stop means is constituted by a peripheral flange (13 or 23).

3. A screw fastener as claimed in claim 1 or claim 2, wherein the stop means is constituted by a washer ring (17 or 27).

4. A screw fastener as claimed in claim 1 or claim 2, wherein the stop means is constituted by a safeguard pin (18 or 28).

5. A screw fastener as claimed in any one of claims 1 to 4, wherein the main body is a bolt (1) having an external first threaded portion (11).

6. A screw fastener as claimed in any one of claims 1 to 4, wherein the main body is a nut (2) having an internal first screw threaded portion (21).

7. A screw fastener as claimed in any one of claims 1 to 6, wherein the axis of the first threaded portion (11 or 21) is parallel with the axis of the second threaded portion (12 or 22).

8. A screw fastener as claimed in claim 7, wherein the axis of the first threaded portion (11 or 21) is co-linear with the axis of the second threaded portion (12 or 22).

9. A screw fastener as claimed in claim 7, wherein the axis of the first threaded portion (11 or 21) intersects the axis of the second threaded portion (12 or 22).

10. A screw fastener as claimed in claim 9, further comprising at least one camber washer (3) arranged under the peripheral nut (2').

11. A screw fastener as claimed in any one of claims 1 to 10, further comprising a pinion space arranged between the main body (1 or 2) and the peripheral nut (2').

12. A screw fastener as claimed in claim 11, further comprising a pinion (41 or 42) coupled in the pinion space for driving the main body (1 or 2) and the peripheral nut (2') in apposite directions by turning the pinion (41 or 42).

## Patentansprüche

1. Eine Schraubensicherung mit einem Bolzengewinde mit einer Mehrzahl von Teilbereichen, wobei die Schraubensicherung umfasst:
einen Hauptteil (1 oder 2), der einen ersten Gewindeteilbereich (11 oder 12) aufweist, mit einem ersten Durchmesser und einem zweiten Durchmesser mit einem äußeren Gewindeteilbereich (12 oder 22) mit einem zweiten Durchmesser, der größer als der erste Durchmesser ist;
eine äußeren Schraubenmutter (2'), die ein Innengewinde aufweist, das in Wirkverbindung mit dem zweiten außen liegenden Gewindeteil des Hauptteils bringbar ist; und
Anschlagmitteln in der Art eines äußeren Flansches (13 oder 23) oder eines Federringes (17 oder 27) oder eines Sicherungsstiftes (18 oder 28), wobei die vorgenannten Anschlagmittel (13 oder 23; 17 oder 27; 18 oder 28) sich von dem Hauptteil an einem Ende des zweiten Teilbereichs des Gewindes erstrecken, um hier mit einer Seite der äußeren Schraubenmutter an einander anzugrenzen, wenn diese mit dem zweiten äußeren Gewindeteilbereich in Wirkverbindung steht, **dadurch gekennzeichnet, dass** die Gewindegänge des ersten und des zweiten Gewindeteilbereichs entweder in entgegen gesetzter Richtungen verlaufen oder in die gleiche Richtung verlaufen.

2. Eine Schraubensicherung nach Anspruch 1, **dadurch gekennzeichnet, dass** das Anschlagmittel durch einen äußeren Flansch (13 oder 23) gebildet ist.

3. Eine Schraubensicherung nach Anspruch 1 oder nach Anspruch 2, **dadurch gekennzeichnet, dass** das Anschlagmittel durch einen Federring (17 oder 27) gebildet ist.

4. Eine Schraubensicherung nach Anspruch 1 oder nach Anspruch 2, **dadurch gekennzeichnet, dass** das Anschlagmittel durch einen Sicherungsstift (18 oder 28) gebildet ist.

5. Eine Schraubensicherung nach einem der vorgenannten Ansprüche 1 bis 4, **dadurch gekennzeichnet, dass** der Hauptteil ein Bolzen (19) ist, der einen ersten äu-ßeren Gewindeteilbereich (11) umfasst.

6. Eine Schraubensicherung nach einem der Ansprüche 1 bis 4, **dadurch gekennzeichnet, dass** der Hauptteil eine Schraubenmutter (2) ist, die einen inneren ersten Teilbereich eines Schraubengewindes (21) umfasst.

7. Eine Schraubensicherung nach einem oder mehreren der Ansprüche 1 bis 6, **dadurch gekennzeichnet, dass** die Achse des ersten Gewindeteilbereichs (11 oder 21) parallel zu der Achse des zweiten Gewindeteilbereichs (12 oder 22) verläuft.

8. Eine Schraubensicherung nach Anspruch 7, **dadurch gekennzeichnet, dass** die Achse des ersten Gewindeteilbereichs (11 oder 21) koaxial mit der Achse des zweiten Gewindeteilbereichs (12 oder 22) ist.

9. Eine Schraubensicherung nach Anspruch 7, **dadurch gekennzeichnet, dass** sich die Achse des ersten Gewindeteilbereichs (11 oder 21) mit der Achse des zweiten Gewindeteilbereichs (12 oder 22) schneidet.

10. Eine Schraubensicherung nach Anspruch 9, ferner umfassend wenigstens eine einseitig abgeflachte Unterlegscheibe (3), die in Wirkverbindung mit der äußeren Schraubenmutter (2') bringbar ist.

11. Eine Schraubensicherung nach einem oder mehreren der Ansprüche 1 bis 10, des Weiteren umfassend eine Aussparung für ein Antriebsritzel, die zwischen dem Hauptteil (1 oder 2) und der äußeren Schraubenmutter (2') angeordnet ist.

12. Eine Schraubensicherung nach Anspruch 11, des Weiteren umfassend ein Antriebsritzel (41 oder 42), das in der Aussparung mit dem Hauptteil (1 oder 2) und der äußeren Schraubenmutter (2') gekoppelt ist, um diese durch Drehen des Antriebsritzels (41 oder 42) in entgegen gesetzte Richtungen zu verfahren.

## Revendications

1. Pièce de fixation à vis, avec des parties filetées multiples, la pièce de fixation à vis comprenant :
. un corps principal (1 ou 2) présentant une première partie filetée (11 ou 21) d'un premier diamètre, et une seconde partie filetée à l'extérieur (12 ou 22) d'un second diamètre supérieur au premier diamètre ;
. un écrou périphérique (2') présentant un filetage interne prévu pour s'engager avec la seconde partie filetée à l'extérieur du corps principal ; et
. un moyen d'arrêt sous la forme d'une bride périphérique (13 ou 23), d'une rondelle annulaire (17 ou 27) ou d'une cheville de protection (18 ou 28), ledit moyen d'arrêt (13 ou 23, 17 ou 27, 18 ou 28) s'étendant depuis le corps principal à une extrémité de la seconde partie filetée pour venir en butée contre une face de l'écrou périphérique lorsqu'il est engagé avec la seconde partie filetée à l'extérieur,
dans laquelle les filetages de la première et de la seconde partie filetée s'étendent soit dans des sens contraires, soit dans le même sens.

2. Pièce de fixation à vis selon la revendication 1, dans laquelle le moyen d'arrêt est constitué par une bride périphérique (13 ou 23).

3. Pièce de fixation à vis selon la revendication 1 ou la revendication 2, dans laquelle le moyen d'arrêt est constitué par une rondelle annulaire (17 ou 27).

4. Pièce de fixation à vis selon la revendication 1 ou la revendication 2, dans laquelle le moyen d'arrêt est constitué par une cheville de protection (18 ou 28).

5. Pièce de fixation à vis selon l'une quelconque des revendications 1 à 4, dans laquelle le corps principal est un boulon (1) présentant une première partie filetée externe (11).

6. Pièce de fixation à vis selon l'une quelconque des revendications 1 à 4, dans laquelle le corps principal est un écrou (2) présentant une première partie filetée interne (21).

7. Pièce de fixation à vis selon l'une quelconque des revendications 1 à 6, dans laquelle l'axe de la première partie filetée (11 ou 21) est parallèle à l'axe de la seconde partie filetée (12 ou 22).

8. Pièce de fixation à vis selon la revendication 7, dans laquelle l'axe de la première partie filetée (11 ou 21) est colinéaire à l'axe de la seconde partie filetée (12 ou 22).

9. Pièce de fixation à vis selon la revendication 7, dans laquelle l'axe de la première partie filetée (11 ou 21) coupe l'axe de la seconde partie filetée (12 ou 22).

10. Pièce de fixation à vis selon la revendication 9, comprenant en outre au moins une rondelle cintrée (3) montée sous l'écrou périphérique (2').

11. Pièce de fixation à vis selon l'une quelconque des revendications 1 à 10, comprenant en outre un espace pour pignon prévu entre le corps principal (1 ou 2) et l'écrou périphérique (2').

12. Pièce de fixation à vis selon la revendication 9, comprenant en outre un pignon (41 ou 42) accouplé dans l'espace pour pignon pour entraîner le corps principal (1 ou 2) et l'écrou périphérique (2') dans des sens contraires en faisant tourner le pignon (41 ou 42).
